# EUROPEAN PATENT APPLICATION

(11) **EP 3 431 448 A1**
(43) Date of publication of application: **23.01.2019**
(21) Application number: 17766414.1
(22) Date of filing: 03.03.2017
(51) Int. Cl.: C03B 11/00, B32B 3/30, B32B 17/00, B60J 1/00, B60R 13/04, C03B 19/00, C03C 17/09, E06B 3/70, E06B 3/02

(54) **GLASS PLATE AND GLASS STRUCTURE**

(30) Priority: 17.03.2016 JP 2016054012
(71) Applicant: AGC INC., Chiyoda-ku, Tokyo 1008405 (JP)
(72) Inventor: ISHIOKA, Hideki, Tokyo 100-8405 (JP)
(74) Representative: Müller-Boré & Partner Patentanwälte PartG mbB
(86) International application number: PCT/JP2017/008574
(87) International publication number: WO 2017/159411

(57) **Abstract**

A glass plate includes a first surface and a second surface that is opposite to the first surface. The first surface is provided with at least two convex portions. A concave portion is provided between the two adjacent convex portions. A distance from the second surface to a bottom of the concave portion is greater than a distance from the second surface to the first surface.

## Description

### BACKGROUND OF THE INVENTION

### 1. Field of the Invention

The disclosure herein generally relates to a glass plate and a glass structure.

### 2. Description of the Related Art

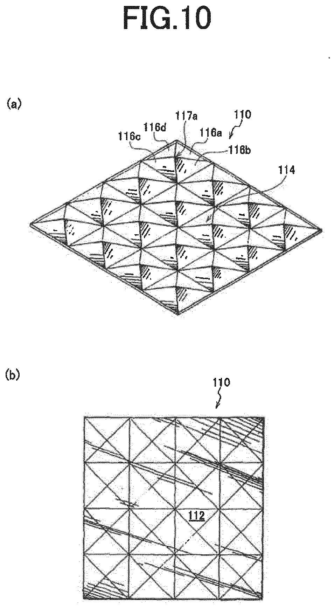

Conventionally, as illustrated in FIG. 10, a decorated glass 110 including a first planar surface 112 and a second surface 114 opposite to the first surface 112 has been known (See Patent document 1). The second surface 114 is a facet forming surface including a plurality of glass cut pieces, each of which is defined by facets 116a, 116b, 116c, and 116d.

### [Citation List]

### [Patent Literature]

[PTL 1] Japanese Patent No. 3184522

### SUMMARY OF THE INVENTION

### [Technical Problem]

However, there has been a problem, in the configuration disclosed in Patent Document 1, that in a concave portion formed between two convex portions on the facet forming surface (i.e. a convex portion forming surface) of the decorated glass 110, a glass plate is easy to break.

In view of the aforementioned background, the present invention mainly aims at providing a glass plate that is less likely to break in the concave portion formed between two convex portions.

### [Solution to Problem]

In order to achieve the aim, the present invention provides a glass plate including a first surface and a second surface that is opposite to the first surface,
the first surface being provided with at least two convex portions,
a concave portion being provided between the two adjacent convex portions, and
a distance from the second surface to a bottom of the concave portion being greater than a distance from the second surface to the first surface, is provided.

### [Advantageous effect of Invention]

According to an aspect of the present invention, a glass plate, which is unlikely to break, in a concave portion formed between two convex portions, can be provided.

### BRIEF DESCRIPTION OF THE DRAWINGS

FIG. 1 is a plan view depicting an example of a glass plate according to an embodiment of the present invention.
FIG. 2 is a cross section of the glass plate according to the embodiment of the present invention, cut along a line A-A in FIG. 1.
FIG. 3 is a cross section depicting an example of a glass plate according to a first variation of the embodiment.
FIG. 4 is a cross section depicting an example of a glass plate according to a second variation of the embodiment.
FIG. 5 is a cross section depicting an example of a glass plate according to a third variation of the embodiment.
FIG. 6 is a cross section depicting an example of a glass plate according to a fourth variation of the embodiment.
FIG. 7 is a cross section depicting a first example of a glass structure using the glass plate according to the embodiment.
FIG. 8 is a cross section depicting a second example of the glass structure using the glass plate according to the embodiment.
FIG. 9 is a cross section depicting a third example of the glass structure using the glass plate according to the embodiment.
FIG. 10 is a diagram depicting an example of a conventional glass plate.

### DETAILED DESCRIPTION OF THE PREFERRED EMBODIMENTS

In the following, with reference to drawings, a laminated plate according to an embodiment of the present invention will be described. Note that in the following descriptions, as an example, a laminated glass used for a vehicle sliding window will be described. However, the present invention is not limited to this. For example, the laminated plate may be a window glass for building, a plastic glazing, a plastic plate, a plastic decorative plate used for an interior or an exterior of a vehicle, and the like.

Moreover, the laminated plate may be, as a vehicle window, for example, a front windshield, a slide glass, a fitted window, rear windshield, or a roof glass.

Moreover, in the drawings for explaining embodiments, coordinates are defined by arrows in the lower left part in each drawing. An explanation will be provided by using the coordinates as necessary. Moreover, in the specification, "X-direction" is assumed to indicate not only a direction from the tail of the arrow representing X-coordinates to the tip, but also a direction inverted by 180 degrees, from the tip to the tail. "Y-direction" and "Z-direction" are also assumed to indicate not only directions from the tails of the arrow representing Y-coordinates and Z-coordinates, respectively, to the tips, but also the respective directions inverted by 180 degrees from the tips to the tails. In the specification, the X-direction and the Y-direction are also referred to as planar directions, and the Z-direction is also referred to as a plate thickness direction.

Moreover, in the specification, terms such as "parallel" or "orthogonal" allow deviations keeping with the effect of the present invention. For example, errors of about ±5° are allowed from parallel or orthogonal positional relationships in a strict sense.

Moreover, in the specification, a "distance" is assumed to indicate a shortest distance.

Moreover, in the present application, a concave-convex portion or a convex portion is not limited to a glass cut piece. For example, the concave-convex portion or the convex portion may be a shape obtained by performing a press forming for a glass plate heated at a temperature around a softening point using a metallic mold or the like. The concave-convex portion or the convex portion may be formed by reducing a pressure of a concave portion of the metallic mold when the press forming is performed so that a glass enters a deep portion of the concave portion of the metallic mold. Moreover, a molten glass may be poured into a metallic mold and cooled, to prepare the concave-convex portion or the convex portion.

### (First embodiment)

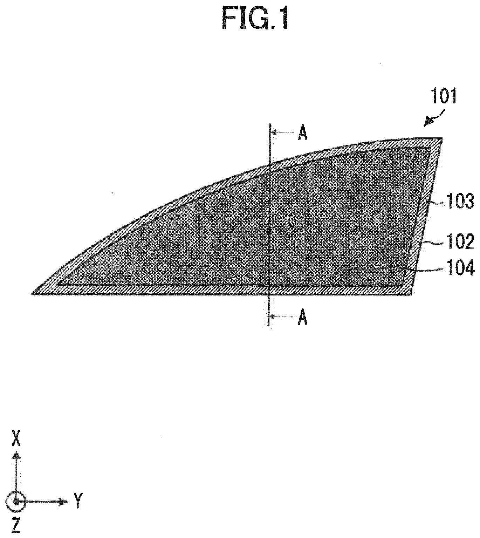

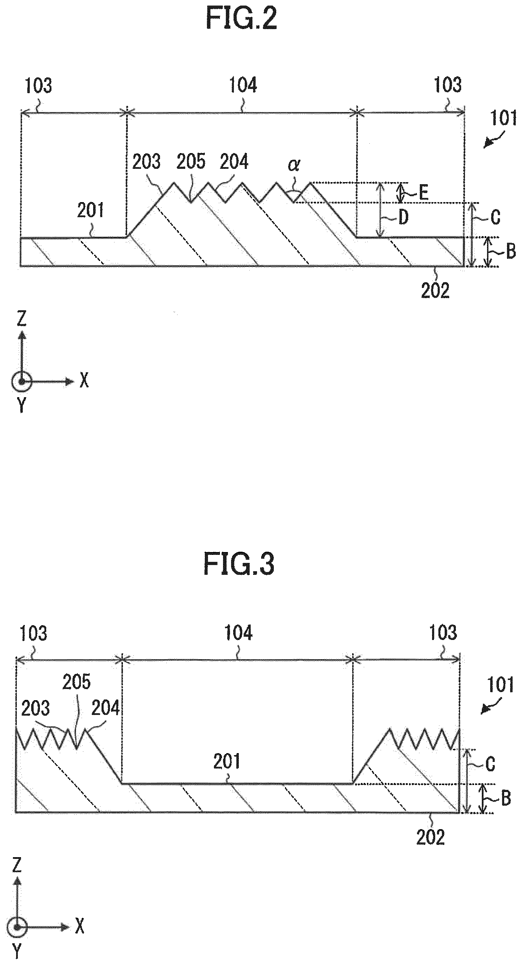

FIG. 1 is a plan view depicting an example of a glass plate according to an embodiment of the present invention. FIG. 2 is a cross section of the glass plate according to the embodiment of the present invention cut along a line of A-A, illustrated in FIG. 1. FIGS. 3 to 6 are diagrams depicting examples of the glass plate according to variations of the embodiment, respectively. The cross section, cut along the line of A-A, passes through a center of gravity G of the glass plate 101.

The glass plate 101 according to the first embodiment includes a first surface 201, and a second surface 202 that is opposite to the first surface 201. Moreover, in a planar view, the glass plate 101 includes a periphery region 103 along a periphery 102, and an in-plane region 104 that occupies a region inside the periphery region 103.

Moreover, the first surface 201 is provided with at least two convex portions 203 and 204 on the first surface 201 that is a front face. Moreover, a concave portion 205 is provided between two adjacent convex portions 203 and 204.

A distance "C" from the second surface 202 to a bottom of the concave portion 205 is greater than a distance "B" from the second surface 202 to the first surface 201.

According to the above-described configuration, the glass plate can be made less likely to break, in the concave portion 205 formed between the two convex portions 203 and 204. The glass plate is considered to become less likely to break according to the mechanism, described as follows. That is, when an external force (e.g. pressing force) is applied from the second surface 202 side of the glass plate 101 toward the first surface 201 side of the glass plate 101, the glass plate is deflected as a whole so that the first surface 201 becomes a convex surface. According to the configuration, a tensile stress is applied to the first surface 201. Particularly, tensile forces are likely to be concentrated on the concave portion 205 formed between the two convex portions 203 and 204. Due to the concentrated stress, a crack is likely to occur in the concave portion 205, and the crack that occurred is likely to grow. Thus, the glass plate 101 is easy to break in the concave portion 205. However, in the glass plate according to the embodiment, because the distance "C" from the second surface 202 to the bottom of the concave portion 205 is greater than the distance "B" from the second surface 202 to the first surface 201, even in the case where tensile stresses are concentrated on the concave portion 205, a crack is less likely to occur. Moreover, even if a crack occurs, the glass plate is less likely to break.

Note that the effect that the glass plate is less likely to break even if a crack occurs will be described as follows. That is, in the case of using the glass plate 101 for an interior decoration member or a vehicular decoration member, the first surface 201 side surface may be set for a bonding surface and the second surface 202 side surface may be set for an exposed surface. In this case, the second surface 202 is a surface touched by a person, and is preferably smooth. According to the configuration of the embodiment, even if a crack once occurs in the concave portion 205 due to the external force, a time for the crack growing by a vibration or the like, penetrating the glass plate 101, and reaching the second surface 202 can be delayed. Thus, it is possible to take measures, such as replacing the glass plate 101, before the glass breaks.

The convex portions 203 and 204 may be formed in the in-plane region 104 of the glass plate 101, as illustrated in FIG. 2. The convex portions 203 and 204 may be arranged all over the in-plane region 104, or arranged only in a part of the in-plane region 104.

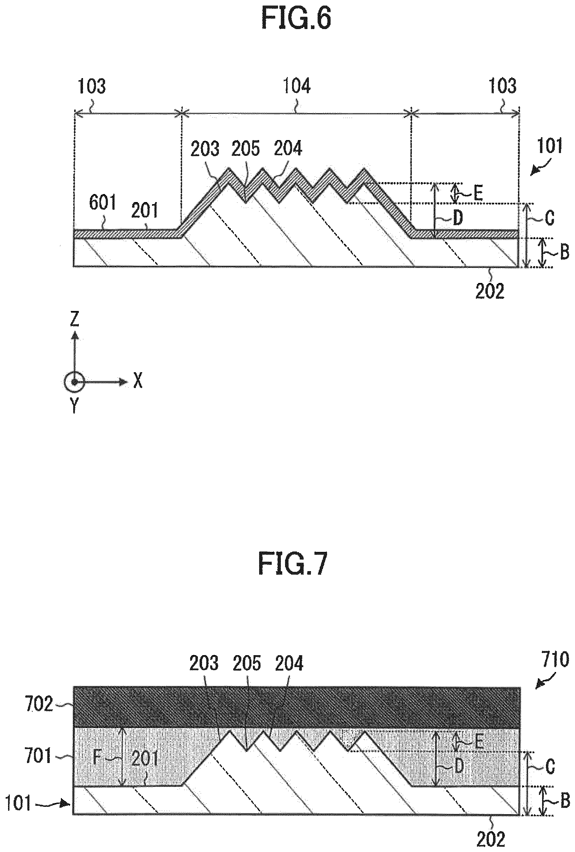

The convex portions 203 and 204 may be formed in the periphery region 103 of the glass plate 101, as illustrated in FIG. 3. The convex portions 203 and 204 may be arranged all over the periphery region 103, or arranged only in a part of the periphery region 103. FIG. 7 is a cross section depicting an example of a configuration in which a single body of the glass plate 101 is bonded to a plate-like body 702 such as a wall surface, where the first surface 201 side of the glass plate 101 is a bonding surface. When the convex portions 203 and 204 are present along the periphery 102 of the glass plate 101, in the periphery region 103, a gap "F" is not formed between the plate-like body 702 and the first surface 201, and the glass plate 101 is less likely to be separated from the plate-like body 702 in the periphery region 103.

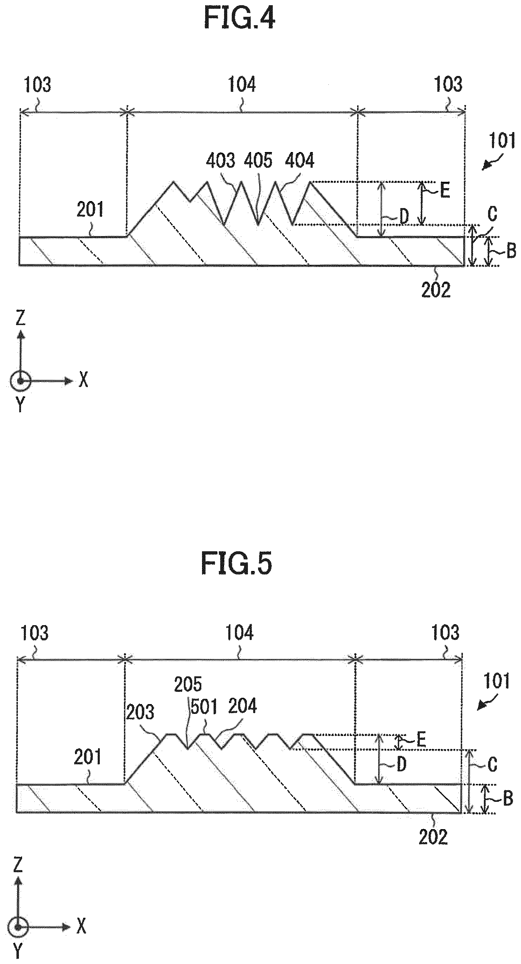

Moreover, as illustrated in FIG. 4, a plurality of pairs of the convex portions 203 and 204 may be formed. Distances from the second surface 202 to bottoms of concave portions 405 formed by convex portions 403 and 404 of a plurality of pairs may be different from each other. In this case, the shortest distance of the distances from the second surface 202 to the bottoms of the plurality of concave portions 405 is referred to as the distance "C".

A shape of each of the convex portions 203 and 204 may be a shape of a triangular pyramid or a shape of a quadrangular pyramid. The shapes of the convex portions 203 and 204 may be, in FIG. 2, shapes having depths in the Y-direction in the same cross section. According to such selection of shapes, a degree of freedom of design property is enhanced.

The tips of the convex portions 203 and 204 may have tapered shapes. The tapered shape means a shape that is narrowed gradually from the first surface 201 to the tips of the convex portions 203 and 204. According to the aforementioned configuration, a design property using a refraction and a reflection of light that enters the glass plate 101 can be given to the glass plate 101. The tip portions of the convex portions 203 and 204 may have acute shapes, or may have optional curvature radii.

Moreover, the shapes of the tips of the convex portions 203 and 204 may have planar shapes, as illustrated in FIG. 5, formed by a planar portion 501. According to such shapes, when a single body of the glass plate 101 is bonded to a plate-like body 702 such as a wall surface, where the first surface 201 side of the glass plate 101 is a bonding surface, required bonding areas can be obtained easily. The planar portion 501 may be formed by grinding the tips of the convex portions 203 and 204.

A distance E from the bottom of the concave portion 205 to the tips of the convex portions 203 and 204 is preferably 0.1 mm or more, more preferably 0.5 mm or more, and further preferably 1.0 mm or more. Compared with the first surface 201, differences in the refraction and the reflection of light that enters the glass plate 101 become more evident, and a more elaborate design property can be given to the glass plate 101. The distance E from the bottom of the concave portion 205 to the tips of the convex portions 203 and 204 is preferably 20 mm or less, more preferably 18 mm or less, and further preferably 15 mm or less. Thus, the convex portions 203 and 204 become difficult to damage.

Moreover, the distance E from the bottom of the concave portion 205 to the tips of the convex portions 203 and 204 is preferably less than or equal to half a distance D from the first surface 201 to the tips of the convex portions 203 and 204. When a single body of the glass plate 101 is bonded to a plate-like body 702 such as a wall surface, where the first surface 201 side of the glass plate 101 is a bonding surface, a difference between a thickness of an adhesive material existing between the convex portions 203 and 204 and the plate-like body 702, and a thickness of an adhesive material existing between the concave portion 205 and the plate-like body 702, decreases. Thus, a stable adhesive strength can be easily obtained.

An angle α of the concave portion 205, illustrated in FIG. 2, is preferably 90 degrees or more, more preferably 110 degrees or more, and further preferably 130 degrees or more. In the case where the angle α is large, when an external force is applied, tensile stresses are unlikely to concentrate on the concave portion 205. Moreover, the concave portion 205 may have an optional curvature radius. In the case where the concave portion 205 has an optional curvature radius, the angle α indicates an angle, at the bottom of the concave portion, between extensions of inclined surfaces configuring the concave portion 205.

The first surface 201, and surfaces of the convex portions 203 and 204, and the concave portion 205 may be polished. According to the treatment, a die mark generated upon shaping using a metallic mold or the like can be removed, and the surface becomes smooth. Thus, diffused reflection is controlled, and thereby the design property of the glass plate 101 is enhanced.

As illustrated in FIG. 6, each of the first surface 201, the convex portions 203 and 204, and the concave portion 205 may have a coating layer 601 on the surface. The coating layer 601 may be a hard coating in order to enhance a scratch resistance. Moreover, the coating layer 401 may be a layer in which gold, chromium, aluminum, or a metal oxide is deposited. Because a metallic luster is given, the design property of the glass plate 101 is enhanced. The coating layer may be arranged particularly on the convex portions 203 and 204, and the concave portion 205.

The second surface 202 may be a polished surface. When the glass plate 101 is bonded to a wall surface or the like, where the first surface 201 side of the glass plate 101 is a bonding surface, because the second surface 202 is a surface that is touched by a person, the second surface 202 is preferably smooth. Moreover, on the second surface 202, a protection layer, which is difficult to be scratched and to which fingerprints are difficult to adhere, may be formed.

The glass plate 101 has a visible light transmissivity (Tv) that is 70% or more, preferably 80% or more, and more preferably 90% or more. When the glass plate 101 is bonded to a wall surface or the like, where the first surface 201 side of the glass plate 101 is a bonding surface, a person, who sees the first surface 201 from the second surface 202 side, can sense a characteristic design property from a light that is refracted or reflected on the first surface 201.

The glass plate 101 may be a strengthened glass. The glass plate 101 may be a strengthened glass that is subjected to an air cooling strengthening or a chemical strengthening.

FIGS. 7, 8 and 9 are diagrams depicting cross sections of a first example 710, a second example 810 and a third example 910 of a glass structure each using the glass plate 101 according to the embodiment. The glass plate 101 is bonded to the plate-like body 702 via an adhesive material 701, where the first surface 201 side of the glass plate 101 is a bonding surface. The adhesive material 701 may be a publicly known adhesive, or may be a double-faced tape or the like.

In FIG. 7, the convex portions 203 and 204 and the concave portion 205 are provided with the adhesive material 701, and bonded to the plate-like body 702. In this configuration, when a difference between a thickness of the adhesive material existing between the convex portions 203 and 204 and the plate-like body 702 and a thickness of the adhesive material existing between the concave portion 205 and the plate-like body 702 is small, a bonding strength becomes stable, and is preferable.

Moreover, as illustrated in FIG. 7, in a gap F between the plate-like body 702 and the first surface 201, the adhesive material 701 may exist. According to the configuration, the bonding strength between the glass plate 101 and the plate-like body 702 is enhanced.

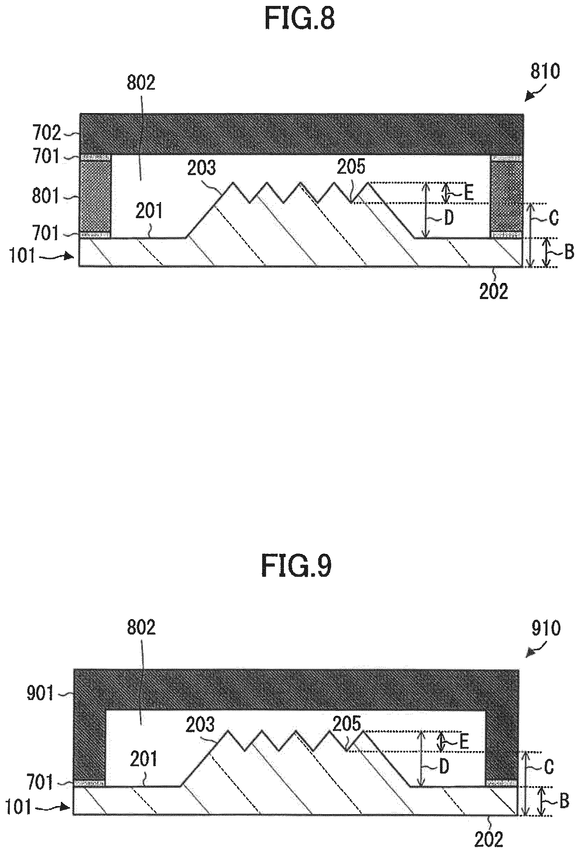

In FIG. 8, the glass structure includes the glass plate 101, the plate-like body 702, and a spacer 801. The spacer 801 is connected to the glass plate 101 and the plate-like body 702 via the adhesive material 701. Because a continuous bonding area can be obtained by the spacer 801, the bonding strength between the glass plate 101 and the plate-like body 702 can be enhanced. Moreover, in a space 802 between the plate-like body 702 and the glass plate 101 formed by the spacer 801, the adhesive material 701 is not required to be arranged. According to the configuration, an amount of the adhesive material 701 used in this configuration can be reduced. Moreover, when the adhesive material exists on the convex portions 203 and 204 and the concave portion 205, depending on refractive indices of glass and the adhesive material, the design property that the convex portions and the concave portion originally have may be deteriorated by the adhesive material. When the adhesive material is absent on the convex portions 203 and 204 and the concave portion 205, the design property will be maintained.

FIG. 9 is a diagram depicting a variation of the glass structure illustrated in FIG. 8. That is, FIG. 9 depicts an example of a glass structure in which the spacer 801 and the plate-like body 702 are integrated. By using the plate-like body with spacer 901 illustrated in FIG. 9, the amount of the adhesive material 701 can be reduced. Moreover, a step of arranging the spacer 801 can be omitted. The plate-like body with spacer 901 is, for example, a plate like body obtained by shaping the spacer 801 and the plate-like body 702 integrally.

The plate-like body 702 or the plate-like body with spacer 901 may be a wall surface of a building, a glazing, a mobile apparatus such as a mobile phone or a smartphone, a vehicular interior member or a vehicular exterior member, or the like. Particularly, in the case where the plate-like body 702 or the plate-like body with spacer 901 is a vehicular interior member or a vehicular exterior member (vehicle decorative member), vibrations from an engine or vibrations from a road surface during a vehicle travelling are applied to the glass plate 101, and the glass structure in which high adhesive strength can be obtained, as illustrated in FIGS. 8 and 9, is preferably used.

### [Industrial Applicability]

The present invention relates to a glass plate and a glass structure, and particularly can be preferably used for a vehicle decorative member, an indoor decorative member, or the like.

The present international patent application is based on and claims the benefit of priority of Japanese Priority Application No. 2016-054012 filed on March 17, 2016, the entire contents of which are hereby incorporated by reference.

### [Reference Signs List]

101 glass plate
102 periphery
103 peripheral region
104 in-plane region
201 first surface
202 second surface
203,204,403,404 convex portion
205,405 concave portion
501 planar portion
601 coating layer
701 adhesive material
702 plate-like body
710,810,910 glass structure
801 spacer
802 space
901 plate like body with spacer
α angle of concave portion
G center of gravity
A-A cross section passing through center of gravity
B distance from second surface to first surface
C distance from second surface to a bottom of concave portion
D distance from first surface to tip of convex portion
E distance from bottom of concave portion to tip of convex portion
F gap between plate-like body and first surface

## Claims

1. A glass plate comprising a first surface and a second surface that is opposite to the first surface,
wherein the first surface is provided with at least two convex portions,
wherein a concave portion is provided between the two adjacent convex portions, and
wherein a distance from the second surface to a bottom of the concave portion is greater than a distance from the second surface to the first surface.

2. The glass plate according to claim 1,
wherein the concave portion has a tapered shape.

3. The glass plate according to claim 1 or 2,
wherein each of the concave portion and the convex portions includes a coating layer on a surface.

4. The glass plate according to any one of claims 1 to 3,
wherein the glass plate is a vehicle decorative member.

5. The glass plate according to any one of claims 1 to 4,
wherein shapes of tips of the convex portions have planar shapes.

6. The glass plate according to any one of claims 1 to 5,
wherein a distance from a bottom of the concave portion to tips of the convex portions is less than or equal to half a distance from the first surface to the tips of the convex portions.

7. A glass structure comprising:
the glass plate according to any one of claims 1 to 6; and
a plate-like body,
wherein the convex portions and the concave portion are provided with an adhesive material, and
wherein the glass plate is bonded to the plate-like body via the adhesive material.

8. A glass structure comprising;
the glass plate according to any one of claims 1 to 6;
a plate like body; and
a spacer,
wherein the spacer is connected to the first surface and to the plate-like body.
